# EUROPÄISCHE PATENTANMELDUNG

(11) **EP 2 366 990 A2**
(43) Veröffentlichungstag der Anmeldung: **21.09.2011**
(21) Anmeldenummer: 11158204.5
(22) Anmeldetag: 15.03.2011
(51) Int. Cl.: G01N 21/64, G02B 21/00

(54) **Verfahren und Vorrichtung zur Durchführung von Multipoint-FCS**

(30) Priorität: 16.03.2010 DE 102010015982; 06.05.2010 DE 102010016818
(71) Anmelder: Leica Microsystems CMS GmbH, 35578 Wetzlar (DE)
(72) Erfinder: Knebel, Werner, Dr., 76709, Kronau (DE)
(74) Vertreter: Schaumburg, Thoenes, Thurn, Landskron, Eckert

(57) **Zusammenfassung**

Zur Durchführung einer Fluoreszenz-Korrelations-Spektroskopie mit einem Fluoreszenz-Mikroskop (29) wird ein Bild einer Probe (40) aufgenommen. Anhand des Bildes wird mindestens ein zu untersuchender Beleuchtungsbereich (43) der Probe (40) ausgewählt. Zu jedem ausgewählten Beleuchtungsbereich (43) wird mindestens ein Beleuchtungsfokus (42) eines Beleuchtungslichtstrahls (24) in dem entsprechenden Beleuchtungsbereich (43) der Probe (40) erzeugt, wodurch fluoreszierende Farbstoffpartikel, die mit Probenmolekülen der Probe (40) gekoppelt sind, innerhalb des entsprechenden Beleuchtungsbereichs (43) zum Fluoreszieren angeregt werden. Das von den Farbstoffpartikeln emittierte Fluoreszenzlicht (44) wird detektiert und abhängig von dem detektierten Fluoreszenzlicht (44) wird mindestens ein Diffusionskoeffizient ermittelt, der repräsentativ für eine Diffusionsfähigkeit der fluoreszierenden Farbstoffpartikel und der mit den Farbstoffpartikeln gekoppelten Probenmolekülen ist.

## Beschreibung

Die Erfindung betrifft ein Verfahren zur Durchführung von Fluoreszenz-Korrelations-Spektroskopie mit einem Fluoreszenzmikroskop. Ferner betrifft die Erfindung eine Vorrichtung zur Durchführung von Fluoreszenz-Korrelations-Spektroskopie, die ein Fluoreszenzmikroskop umfasst.

Die Fluoreszenz-Korrelations-Spektroskopie (fluorescence correlation spectroscopy, FCS) ist eine optische Messmethode, mit der Diffusionskoeffizienten und Konzentrationen von Probenmolekülen einer Probe und Interaktionen zwischen den Probenmolekülen gemessen werden (siehe "Two-Focus Fluorescene Correlation Spectroscopy, Dissertation von Thomas Dertinger an der Universität Köln, 2007). Dazu werden fluoreszierende Farbstoffe in die Probe so eingebracht, dass die Farbstoffpartikel mit den Probenmolekülen Verbindungen eingehen. Insbesondere können fluoreszierende Proteine durch Fusion mit Proteinen einer Zelle der Probe diese Proteine der Zelle markieren. Zur Herstellung derartiger Fusionsproteine wird die DNA des zu untersuchenden Proteins mit der DNA des fluoreszierenden Proteins verbunden und in eine Form gebracht, die von der Zelle aufgenommen werden kann, so dass sie das Fusionsprotein selbstständig herstellt. In vielen Anwendungs-Fällen wird das zu untersuchend Protein noch an die korrekte Stelle in der Zelle transportiert. Das fluoreszierende Protein kann mit Hilfe der Fluoreszenzmikroskopie Aufschluss über die zeitliche und räumliche Lokalisation des Zielproteins in der Zelle geben. Als fluoreszierende Proteine sind beispielhaft GFP, PA-GFP, Kaede, Kindling, Dronpa oder PS-CFP genannt.

Durch die Fluoreszenz des fluoreszierenden Proteins kann die räumliche und zeitliche Verteilung des anderen Proteins in lebenden Zellen, Geweben oder Organismen direkt beobachtet werden. Dies ermöglicht das Ermitteln des Diffusionskoeffizienten der fluoreszierenden Farbstoffpartikel und damit die Diffusionsfähigkeit der an die fluoreszierenden Farbstoffpartikel gebundenen Proteine und Probenmoleküle. Darüber hinaus ist es möglich, die Konzentration der an die fluoreszierenden Farbstoffpartikel gebundenen Probenmoleküle zu ermitteln. Anhand der Diffusionskoeffizienten kann dann überprüft werden, ob die Probenmoleküle miteinander interagieren, da sich die Diffusionsfähigkeit der Probenmoleküle bei einer Interaktion verringert. Ähnliche Mikroskopieverfahren, bei denen zum Ermitteln von Diffusionskoeffizienten ein Scan-Mikroskop verwendet wird sind beispielsweise ICS oder RICS.

Es ist Aufgabe der Erfindung, ein Verfahren und eine Vorrichtung zur Durchführung einer Fluoreszenz-Korrelations-Spektroskopie zu schaffen, das bzw. die auf einfache und flexible Weise ein Untersuchen einer Probe, insbesondere ein Ermitteln von Diffusionskoeffizienten von Probenmolekülen der Probe, ermöglicht.

Die Aufgabe wird gelöst durch die Merkmale der unabhängigen Ansprüche. Vorteilhafte Ausgestaltungen sind in den Unteransprüchen angegeben.

Die Erfindung zeichnet sich gemäß einem ersten Aspekt durch ein Verfahren zur Durchführung einer Fluoreszenz-Korrelations-Spektroskopie mit einem Fluoreszenzmikroskop aus. Dabei wird ein Beleuchtungslichtstrahl erzeugt und es wird mindestens ein Beleuchtungsbereich der Probe ausgewählt. Der Beleuchtungslichtstrahl wird in mindestens drei Teilstrahlen so aufgespaltet, dass die Teilstrahlen über eine Mikroskopoptik des Fluoreszenzmikroskops auf den ausgewählten Beleuchtungsbereich fokussiert werden, wodurch Farbstoffpartikel in dem Beleuchtungsbereich der Probe zum Fluoreszieren angeregt werden. Das von den Farbstoffpartikeln emittierte Fluoreszenzlicht wird detektiert und abhängig von dem detektierten Fluoreszenzlicht wird mindestens ein Diffusionskoeffizient ermittelt, der repräsentativ für eine Diffusionsfähigkeit der fluoreszierenden Farbstoffpartikel ist.

Das Auswählen des oder der Beleuchtungsbereiche, der bzw. die völlig beliebig ausgestaltet sein können und deren Anzahl beliebig gewählt werden kann, ermöglicht auf einfache Weise ein besonders flexibles Untersuchen der Probe. Insbesondere können gleichzeitig in den unterschiedlichen Beleuchtungsbereichen Diffusionskoeffizienten gleicher oder unterschiedlicher Farbstoffpartikel und damit gleicher oder unterschiedlicher Probenmoleküle ermittelt und miteinander verglichen werden. Das Ermitteln der Diffusionskoeffizienten ermöglicht, detaillierte Informationen darüber zu erhalten, ob und gegebenenfalls welche Probenmoleküle miteinander interagieren, da bei Interaktionen die Diffusionskoeffizienten der beteiligten Probenmoleküle abnehmen. Die Probenmoleküle umfassen auch Proteine der Probe.

Das Ausleuchten des oder der Beleuchtungsbereiche der Probe mit Hilfe von mindestens drei Teilstrahlen trägt besonders wirkungsvoll dazu bei, dass die Beleuchtungsbereiche beliebig gewählt und gleichzeitig vorteilhaft ausgeleuchtet werden können. Das erfindungsgemäße Verfahren kann auch als Multipoint-FCS bezeichnet werden, wodurch zum Ausdruck kommt, dass das Verfahren eine Fluoreszenz-Korrelations-Spektroskopie mit mehreren, insbesondere mindestens drei Beleuchtungsfoki ist.

In einer vorteilhaften Ausgestaltung wird zunächst ein Bild der Probe aufgenommen und auf einer Anzeigeeinheit dargestellt. Anhand des Bildes wird von einem Benutzer mindestens ein beliebiger oder vorgegebener Teilbereich des Bildes ausgewählt. Abhängig von dem bzw. den ausgewählten Teilbereichen wird ermittelt, wie der Beleuchtungslichtstrahl aufgespaltet werden muss, damit die Teilstrahlen des Beleuchtungslichtstrahls auf Beleuchtungsbereiche der Probe fokussiert werden, die zu den Teilbereichen des Bildes der Probe korrespondieren. Anschließend wird der Beleuchtungslichtstrahl entsprechend aufgespaltet und die Probe entsprechend beleuchtet. Das Auswählen beliebiger Teilbereiche anhand des Bildes der Probe ermöglicht ein besonders intuitives und flexibles Untersuchen der Probe.

Das Fluoreszenzlicht wird auf eine Detektorvorrichtung gelenkt, die mehrere Detektorelemente umfasst. Auf einer sensitiven Fläche der Detektorvorrichtung entstehen aufgrund des Fluoreszenzlichts mehrere Detektionsfoki. Abhängig von dem bzw. den ausgewählten Beleuchtungsbereichen auf oder in der Probe werden Positionen der entsprechenden Detektionsfoki auf der sensitiven Fläche der Detektorvorrichtung ermittelt. Nachfolgend werden selektiv genau die Detektorelemente ausgelesen und/oder deren Signale ausgewertet, auf denen die Detektionsfoki positioniert sind. Dies trägt zu einem besonders effektiven und besonders schnellen Ermitteln der Diffusionskoeffizienten und der Konzentrationen bei.

Die Konfokalität des Fluoreszenzmikroskops kann einfach eingestellt werden, indem die Anzahl der Detektorelemente, die je Detektionsfokus ausgelesen und/oder ausgewertet werden, eingestellt wird. Dadurch wird ausgenutzt, dass die Detektionsfoki eine Lichtverteilung aufweisen, die regelmäßig ihr Maximum in der Mitte des Detektionsfokus hat. Eine maximale Konfokalität kann nun erreicht werden, wenn lediglich eines der Detektorelemente, das vorzugsweise in der Mitte des Detektionsfokus liegt, ausgelesen bzw. ausgewertet wird. Mit zunehmender Anzahl der Detektorelemente pro Detektionsfokus nimmt dann die Konfokalität ab. Dies entspricht einer Lochblende mit variablem Lochdurchmesser. Im Extremfall werden alle Detektorelemente ausgelesen und ausgewertet, was einer Widefield-Aufnahme der Probe entspricht. Die Widefield-Aufnahme kann beispielsweise zum Aufnehmen des Bildes der Probe genutzt werden.

Die Erfindung zeichnet sich gemäß einem zweiten Aspekt durch eine Vorrichtung zur Durchführung der Fluoreszenz-Korrelations-Spektroskopie aus. Die Vorrichtung umfasst das Fluoreszenzmikroskop, das eine Lichtquelle hat, die den Beleuchtungslichtstrahl erzeugt. Der Beleuchtungslichtstrahl ist auf eine erste Spiegelvorrichtung gerichtet, die eine Vielzahl von optischen Elementen aufweist. Eine Steuereinheit ist mit der ersten Spiegelvorrichtung gekoppelt und steuert die optischen Elemente so an, dass die optischen Elemente den Beleuchtungslichtstrahl in mindestens drei Teilstrahlen aufspalten. Eine Mikroskopoptik fokussiert die Teilstrahlen auf die Beleuchtungsbereiche der Probe. Die Teilstrahlen regen die Farbstoffpartikel der Probe zum Fluoreszieren an. Eine Detektorvorrichtung detektiert die von der Probe emittierten Fluoreszenzlichtstrahlen. Die Detektorvorrichtung umfasst mehrere Detektorelemente, wobei die Steuereinheit steuert, welche Detektorelemente ausgelesen und/oder ausgewertet werden.

Bei der Erzeugung mehrerer Beleuchtungsfoki innerhalb eines oder mehrerer Beleuchtungsbereiche kann aufgrund von Überschneidungen unterschiedlicher Beleuchtungslichtkegel oder Detektionslichtkegel ein unerwünschtes Hintergrundsignal erzeugt werden. Eine Reduktion dieses Hintergrundsignals kann bei einem herkömmlichen konfokalen Mikroskop mit einem einzigen Beleuchtungsfokus mit Hilfe einer Lochblende im Detektionsstrahlengang erreicht werden. Bei Multipoint-FCS mit mehreren Beleuchtungsfoki ist zur Reduktion des Hintergrundsignals vorzugweise eine zweite Spiegelvorrichtung angeordnet, auf die von der Probe emittierte Fluoreszenzlichtlichtstrahlen gerichtet sind und über die die Fluoreszenzlichtstrahlen hin zu der Detektorvorrichtung verlaufen. Die zweite Spiegelvorrichtung weist entsprechend der ersten Spiegelvorrichtung eine Vielzahl von optischen Elementen auf. Bevorzugt erfolgt eine Ansteuerung der optischen Elemente der zweiten Spiegelvorrichtung korrespondierend zu der Ansteuerung der optischen Elemente der ersten Spiegelvorrichtung. Die zweite Spiegelvorrichtung kann wie mehrere Lochblenden verwendet werden, wobei sowohl deren Anzahl als auch deren Lochform abhängig von der Ansteuerung der optischen Elemente variabel ist.

Bei fluoreszierenden Proben ist die Emissionswellenlänge des Fluoreszenzlichts grundsätzlich länger als die Anregungswellenlänge. Somit ist auch der auf die zweite Spiegelvorrichtung projizierte Fokus des Fluoreszenzlichts größer als der entsprechende Beleuchtungsfokus in der Probe. Daher ist es vorteilhaft, um kein Licht zu verlieren, die Lochblendengröße vor der Detektorvorrichtung zu vergrößern. Die Vergrößerung der Lochblende kann man bei der zweiten Spiegelvorrichtung erreichen, indem man außen um die aktiven optischen Elemente der zweiten Spiegelvorrichtung herum, die zu den aktiven optischen Elementen der ersten Spiegelvorrichtung korrespondieren, noch weitere optische Elemente der zweiten Spiegelvorrichtung aktiviert. Will man eine geringe Konfokalität erzielen, können entsprechend mehr optische Elemente der zweiten Spiegelvorrichtung dazugeschaltet werden.

Alternativ dazu kann das von der Probe emittierte Fluoreszenzlicht über die erste Spiegelvorrichtung zu der Detektorvorrichtung geführt werden, jedoch kann die Lochblendengröße dann nicht mehr variiert werden, da mit Hilfe der ersten Spiegelvorrichtung auch die Teilstrahlen des Anregungslicht erzeugt werden.

Ausführungsbeispiele der Erfindung sind nachfolgend anhand von schematischen Zeichnungen näher erläutert.

Es zeigen:
- Figur 1: eine erste Ausführungsform eines Fluoreszenzmikroskops,
- Figur 2: eine Darstellung einer Probe,
- Figur 3: eine erste Spiegelvorrichtung,
- Figur 4: ein erstes Ausführungsbeispiel eines Probenhalters mit der Probe,
- Figur 5: eine Detektorvorrichtung,
- Figur 6: ein Ablaufdiagramm eines Programms zur Durchführung von Multipoint-FCS,
- Figur 7: ein zweites Ausführungsbeispiel des Probenhalters mit der Probe,
- Figur 8: ein Ablaufdiagramm eines Programms zum Einstellen einer Konfokalität des Fluoreszenzmikroskops,
- Figur 9: eine zweite Ausführungsform des Fluoreszenzmikroskops.

Elemente gleicher Konstruktion oder Funktion sind figurenübergreifend mit den gleichen Bezugszeichen gekennzeichnet.

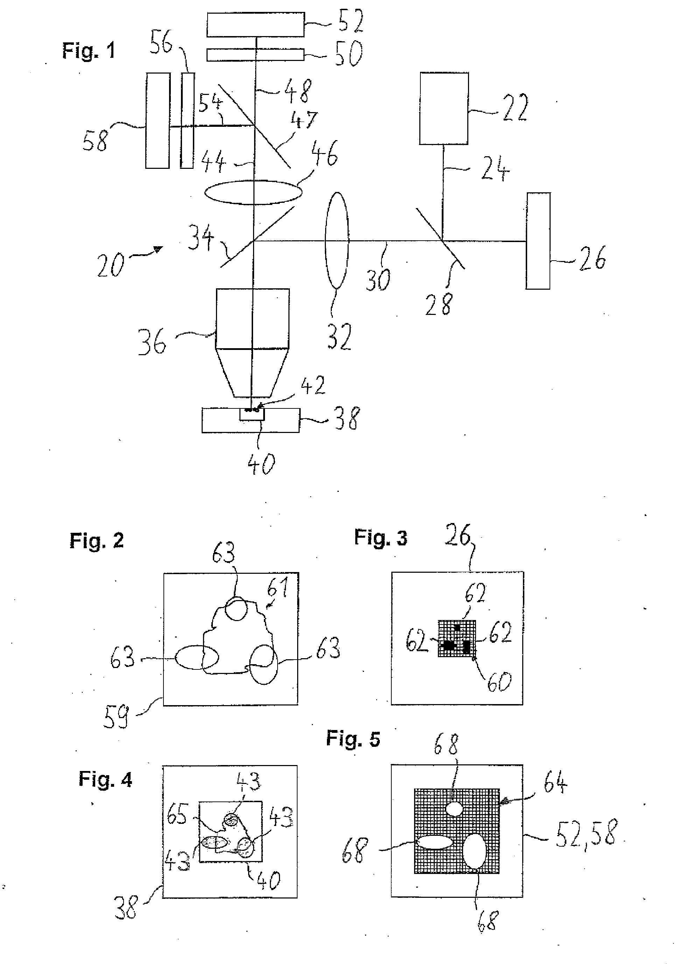

Figur 1 zeigt ein Fluoreszenzmikroskop 20, das eine Lichtquelle 22 umfasst, die einen Beleuchtungslichtstrahl 24 erzeugt. Ein erster Strahlteiler 28 lenkt den Beleuchtungslichtstrahl 24 hin zu einer ersten Spiegelvorrichtung 26. Die erste Spiegelvorrichtung 26 lenkt Teilstrahlen 30 des Beleuchtungslichtstrahls 24 hin zu dem ersten Strahlteiler 28, wobei dieser die Teilstrahlen 30 hin zu einem ersten Linsensystem 32 durchlässt. Das erste Linsensystem 32 bildet die Teilstrahlen 30 auf einen zweiten Strahlteiler 34 ab, der die Teilstrahlen 30 hin zu einem Objektiv 36 ablenkt. Das Objektiv 36 fokussiert die Teilstrahlen 30 auf oder in einer Probe 40, die von einem Probenhalter 38 gehalten ist. Jeder fokussierte Teilstrahl 30 ruft je einen Beleuchtungsfokus 42 auf bzw. in der Probe 40 hervor. Die übrigen Anteile des Beleuchtungslichtstrahls 24 außer den Teilstrahlen 30 werden von der ersten Spiegelvorrichtung 26 kompensiert oder so abgelenkt, dass sie nicht hin zu der Probe 40 weitergeführt werden.

Die Probe 40 umfasst Farbstoffpartikel, die an Probenmoleküle, beispielsweise Proteine, der Probe 40 gekoppelt sind und die zum Fluoreszieren anregbar sind. Die Farbstoffpartikel können zum Fluoreszieren angeregt werden und umfassen beispielsweise fluoreszierende Proteine, wie zum Beispiel GFP, PA-GFP, Kaede, Kindling, Dronpa, PS-CFP oder viele andere. Die Farbstoffpartikel, die sich in den Beleuchtungsfoki 42 befinden, emittieren Fluoreszenzlicht 44, das über das Objektiv 36 und den Strahlteiler 34 auf ein zweites Linsensystem 46 gerichtet ist. Das zweite Linsensystem 46 bildet das Fluoreszenzlicht 44 auf einen dritten Strahlteiler 47 ab, der das Fluoreszenzlicht 44 in einen ersten Detektionsteilstrahl 48 und einen zweiten Detektionsteilstrahl 54 aufteilt und der den ersten Detektionsteilstrahl 48 über einen ersten Sperrfilter 50 hin zu einer ersten Detektorvorrichtung 52 durchlässt und der den zweiten Detektionsteilstrahl 54 über einen zweiten Sperrfilter 56 hin zu einer zweiten Detektorvorrichtung 58 reflektiert.

Figur 2 zeigt eine Anzeigeeinheit 59, beispielsweise einen Bildschirm, auf dem ein Bild 61 der Probe 40 dargestellt ist. Auf der Anzeigeeinheit 59 sind Teilbereiche 63 der Anzeigeeinheit 59 gekennzeichnet. Die Teilbereiche 63 sind von einem Benutzer beliebig ausgewählt. Das heißt, dass der Benutzer mit Hilfe einer Benutzereingabe in eine nicht dargestellte Auswahlvorrichtung die Anzahl und die Form der Teilbereiche 63 beliebig oder nach einer beliebigen Vorgabe auswählen kann. Insbesondere wählt der Benutzer mindestens einen Teilbereich 63 aus. Die Auswahlvorrichtung ist beispielsweise von einem Computer umfasst und weist eine Eingabevorrichtung auf, die mit einer Recheneinheit gekoppelt ist, beispielsweise eine Maus oder einen digitalen Computerstift, wobei die Recheneinheit mit der Anzeigeeinheit 59 gekoppelt ist. Der Benutzer kann somit individuell und flexibel einstellen, welchen Bereich oder welche Bereiche der Probe 40 untersucht werden sollen. Beispielsweise kann der Benutzer die Teilbereiche 63 so auswählen, dass Änderungen der Diffusionsfähigkeit einzelner Farbstoffpartikel und der Probenmoleküle, mit denen sie verbunden sind, beim Übergang von einer Probenstruktur in eine andere Probenstruktur beobachtbar sind, beispielsweise bei Diffusion durch eine Zellmembran der Probe. Die Änderung der Diffusionsfähigkeit der Probenmoleküle kann ein Nachweis von Wechselwirkungen der Probenmoleküle untereinander sein, da sich deren Diffusionsfähigkeit bei einer Interaktion verringert.

Figur 3 zeigt die erste Spiegelvorrichtung 26, die eine Vielzahl optischer Elemente 60 umfasst. Die erste Spiegelvorrichtung 26 umfasst einen Mikrospiegelaktor, der als optische Elemente 60 einzelne bewegliche Spiegel umfasst. Die optischen Elemente 60 umfassen mehrere aktive optische Elemente 62, die in Figur 3 als geschwärzte Bereiche gekennzeichnet sind. Die aktiven optischen Elemente 62 sind dadurch charakterisiert, dass sie mindestens drei vorzugsweise mehr Teilstrahlen 30 des Beleuchtungslichtstrahls 24 so reflektieren, dass die Teilstrahlen 30 über das erste Linsensystem 32 und das Objektiv 36 auf die Probe 40 gerichtet sind. Die übrigen optischen Elemente 60 sind so eingestellt, insbesondere sind die beweglichen Spiegel so verkippt, dass die dadurch reflektierten Teilstrahlen 30 nicht über das Objektiv 36 auf die Probe 40 fokussiert sind oder dass diese Anteile des Beleuchtungslichtstrahls 24 überhaupt nicht von den entsprechenden Spiegeln reflektiert sondern vielmehr absorbiert werden. Die erste Spiegelvorrichtung 26 umfasst vorzugsweise ein Mikrospiegel-Array (Digital Mirror Device) mit einzeln ansteuerbaren beweglichen Spiegeln. Alternativ dazu kann die erste Spiegelvorrichtung einen LCOS-Aktor mit mehreren LCOS-Chips (Liquid Crystal on Silicon) umfassen, wobei die LCOS's im ersten Schaltzustand Licht zu einem verspiegelten Bereich hinter den entsprechenden LCOS's und zurück durchlassen und wobei die LCOS's im zweiten Schaltzustand das Licht zu dem verspiegelten Bereich hinter den entsprechenden LCOS's nicht durchlassen. Beispielsweise können die LCOS's als Polarisationsfilter genutzt werden und das Beleuchtungslicht kann derart polarisiert erzeugt werden oder mit Hilfe des ersten Strahlteilers 28 derart polarisiert werden, dass dann abhängig von dem Schaltzustand der LCOS's das Beleuchtungslicht selektiv absorbiert und nicht reflektiert oder reflektiert wird.

Figur 4 zeigt den Probenhalter 38 aus Sicht des Objektivs 36. Der Probenhalter 38 hält die Probe 40, welche eine Probenstruktur 65 aufweist. Die Probenstruktur 65 umfasst beispielsweise ein Zellmembran oder eine Kernhülle eines Zellkerns der Probe 40. Beleuchtungsbereiche 43 auf der Probe 40 korrespondieren zu den ausgewählten Teilbereichen 63 auf der Anzeigeeinheit 59. Die Beleuchtungsbereiche 43 werden mit mehreren Beleuchtungsfoki 42 ausgeleuchtet, die durch die Teilstrahlen 30 hervorgerufen werden, die von den aktiven optischen Elementen 62 hin zu der Probe 40 gelenkt werden. Die einzelnen Beleuchtungsfoki 42, aus denen sich die Beleuchtungsbereiche 43 zusammensetzen, sind aus Gründen der Übersichtlichkeit in Figur 4 nicht eingezeichnet. Alternativ dazu können die Beleuchtungsbereiche 43 auch so klein gewählt werden, dass sie mit lediglich einem Beleuchtungsfokus 42 ausgeleuchtet werden können.

Figur 5 zeigt eine Oberfläche der Detektorvorrichtungen 52, 58. Die jeweilige Detektorvorrichtung 52, 58 weist an ihrer Oberfläche eine sensitive Fläche auf, die durch eine Vielzahl von Detektorelementen 64 ausgebildet ist. Die Detektionsteilstrahlen 48, 54 sind so auf die sensitive Fläche der Detektorvorrichtungen 52, 58 gerichtet, dass mehrere Detektionsfoki in je einem Detektionsbereich 68 auf der sensitiven Fläche entstehen. Die Detektionsfoki korrespondieren zu den Beleuchtungsfoki 42 auf der Probe 40 und zu den aktiven optischen Elementen 62 der ersten Spiegelvorrichtung 26 und die beleuchteten Detektionsbereiche 68 korrespondieren zu den Beleuchtungsbereichen 43 auf der Probe 40 und zu den Teilbereichen 63 auf der Anzeigeeinheit 59. Die Detektorelemente 64 sind vorzugsweise CMOS-Detektoren oder alternativ dazu APD's oder DEPFET-Detektoren.

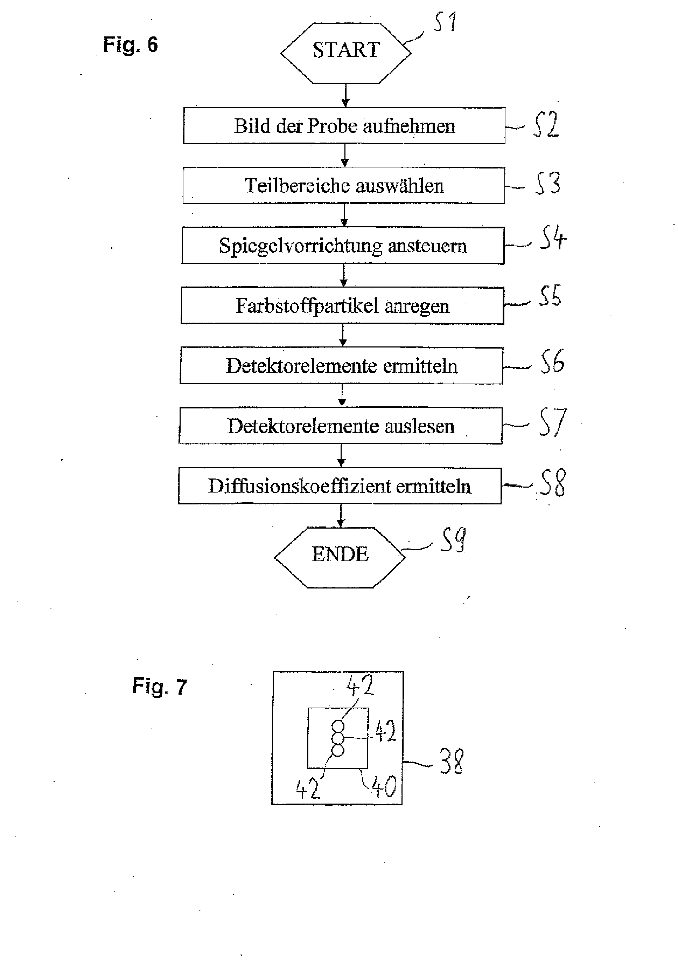

Figur 6 zeigt ein Ablaufdiagramm eines Programms zum Durchführen einer Multipoint-FCS mit dem Fluoreszenzmikroskop 20. Bei der bekannten Fluoreszenz-Korrelations-Spektroskopie (FCS) werden Diffusionskonstanten einzelner Probenmoleküle mit Hilfe eines oder zwei Beleuchtungsfoki 42 ermittelt. Bei der Multipoint-FCS werden Diffusionskonstanten einzelner Probenmoleküle mit Hilfe von drei oder mehr Beleuchtungsfoki 42 ermittelt, wobei die Beleuchtungsfoki 42 auf die Beleuchtungsbereiche 43 der Probe 40 gerichtet sind und diese ausleuchten. Abhängig von den Diffusionskonstanten können dann die Konzentration der Probenmoleküle ermittelt werden und Interaktionen zwischen den Probenmolekülen nachgewiesen werden. Das Programm dient dazu, zumindest den Diffusionskoeffizienten von einer Sorte von Probenmolekülen der Probe 40 zu ermitteln. Das Programm wird vorzugsweise in einem Schritt S1 gestartet, beispielsweise zeitnah zu einer Inbetriebnahme des Fluoreszenzmikroskops 20.

In einem Schritt S2 wird das Bild 61 der Probe 40 aufgenommen. Das Bild 61 kann beispielsweise mit Hilfe der Widefield-Aufnahme aufgenommen werden, bei der alle optischen Elemente 60 der ersten Spiegelvorrichtung 26 aktiv sind und so nahezu der gesamte Beleuchtungslichtstrahl 24 hin zu der Probe 40 gelenkt wird und bei der alle Detektorelemente 64 der beiden Detektorvorrichtungen 52, 58 ausgelesen und ausgewertet werden.

In einem Schritt S3 wählt ein Benutzer des Fluoreszenzmikroskops 20 mit Hilfe der Auswahlvorrichtung anhand des Bildes 61 der Probe 40 auf der Anzeigeeinheit 59 einen oder mehrere der Teilbereiche 63 aus, wobei sowohl die Anzahl als auch die Form der Teilbereiche 63 von dem Benutzer beliebig gewählt werden kann.

In einem Schritt S4 wird mit Hilfe der Steuereinheit abhängig von den durch den Benutzer vorgegebenen Teilbereichen 63 auf der Anzeigeeinheit 59 die erste Spiegelvorrichtung 26 so angesteuert, dass genau die optischen Elementen 60 der ersten Spiegelvorrichtung 26 aktiviert werden, die den Beleuchtungslichtstrahl 24 so aufteilen und die entsprechenden Teilstrahlen 30 so reflektieren, dass diese Teilstrahlen 30 Beleuchtungsfoki 42 auf der Probe 40 derart bewirken, dass die zu den Teilbereichen 63 korrespondierenden Beleuchtungsbereiche 43 der Probe 40 ausgeleuchtet sind.

In einem Schritt S5 werden die Farbstoffpartikel in den Beleuchtungsfoki 42 zum Fluoreszieren angeregt. Falls Farbstoffpartikel verwendet werden, die einen ersten Zustand haben, in dem die Farbstoffpartikel zum Fluoreszieren anregbar sind, und die einen zweiten Zustand haben, in dem die Farbstoffpartikel nicht zum Fluoreszieren anregbar sind, so wird vor dem Schritt S5 eine Untermenge der Farbstoffpartikel im ersten Zustand erzeugt. Bekannte Mikroskopieverfahren, die dies ausnutzen sind beispielsweise PALM, STORM, FPALM, DSTORM, GSDIM und weitere. Bekannte Farbstoffpartikel die dabei verwendet werden sind beispielsweise PA-GFP, PS-CFP etc.

In einem Schritt S6 werden abhängig von den ausgewählten Teilbereichen 63 die Detektorelemente 64 ermittelt, auf die die Detektionsteilstrahlen 48, 54 in Form der Detektionsfoki fokussiert sind.

In einem Schritt S7 werden die in dem Schritt S6 ermittelten Detektorelemente 64 ausgelesen und deren Daten werden ausgewertet. Alternativ dazu können alle Detektorelemente 64 ausgelesen werden, aber nur die Daten der in dem Schritt S6 ermittelten Detektorelemente 64 ausgewertet werden. Dieses selektive Auslesen und/oder Auswerten der Detektionsbereiche 68 trägt zu einem besonders Schnellen Ermitteln der Diffusionskoeffizienten bei.

Abhängig von den ausgewerteten Daten wird zumindest ein Diffusionskoeffizient von Probenmolekülen der Probe 40 ermittelt. Alternativ oder zusätzlich kann die Probenmolekülkonzentration einzelner Probenmoleküle in den ausgewählten Teilbereichen 63 ermittelt werden. Anhand der Diffusionskoeffizienten können Interaktionen der Probenmoleküle untereinander beobachtet werden, da in der Regel die Diffusionsfähigkeit der Probenmoleküle abnimmt, sobald diese eine Interaktion mit anderen Probenmolekülen eingehen.

In einem Schritt S9 kann das Programm beendet werden. Vorzugsweise wird das Programm jedoch fortlaufend während des Betriebs des Fluoreszenzmikroskops 20 abgearbeitet, insbesondere jedes Mal dann, wenn der Benutzer neue Teilbereiche 63 anhand der Darstellung des Bildes 61 auf der Anzeigeeinheit 59 auswählt.

Figur 7 zeigt ein zweites Ausführungsbeispiel, bei dem die Beleuchtungsfoki 42 derart aneinander gereiht sind, dass sich bewegende Probenmoleküle in der Probe 40 über eine größere Strecke beobachtet werden können. Das Erzeugen mehrerer aneinandergereihter Beleuchtungsfoki 42 ermöglicht besonders gut, Nachbarschaftsbeziehungen der Probenmoleküle zueinander zu untersuchen.

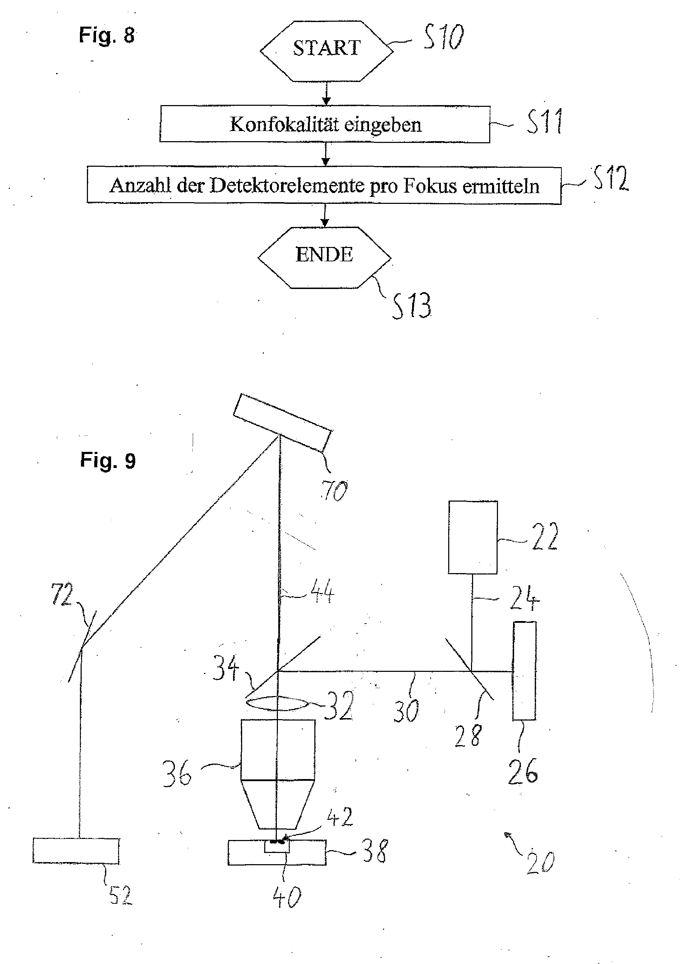

Figur 8 zeigt ein Ablaufdiagramm eines Programms zum Einstellen einer Konfokalität des Fluoreszenzmikroskops 20. Das Programm wird vorzugsweise in einem Schritt S10 gestartet, in dem gegebenenfalls Variablen initialisiert werden. In einem Schritt S11 wird die gewünschte Konfokalität von dem Benutzer vorgegeben. Abhängig von der eingegebenen Konfokalität wird in einem Schritt S12 die Anzahl der Detektorelemente 64 ermittelt, die je Beleuchtungsfokus 42 und entsprechendem Detektionsfokus ausgelesen bzw. ausgewertet werden. Je größer die Konfokalität ist, desto weniger Detektorelemente 64 je Detektionsfokus werden ausgelesen. Je kleiner die Konfokalität vorgegeben wird, desto mehr Detektorelemente 64 je Detektionsfokus können ausgelesen werden. In einem Schritt S13 kann das Programm beendet werden. Vorzugsweise wird jedoch nach dem Schritt S13 das Programm zum Durchführen der Multipoint-FCS abgearbeitet.

Aufgrund der mehreren Beleuchtungsfoki 42 innerhalb eines oder mehrerer der Beleuchtungsbereiche 43 kann es zu einem optischen Crosstalk, insbesondere zu einem Überlappen mehrerer Beleuchtungslichtkegel oder Detektionslichtkegel kommen. Dies führt zu Streulicht und einem unerwünschten Hintergrundsignal, welches mit zunehmender Probendicke stärker wird.

Figur 9 zeigt eine zweite Ausführungsform des Fluoreszenzmikroskops 20, bei der die Fluoreszenzlichtstrahlen 44 vor der Detektion auf eine zweite Spiegelvorrichtung 70 treffen, die zu einem Verringern und/oder Vermeiden des unerwünschten Hintergrundsignals dient. Die zweite Spiegelvorrichtung 70 kann entsprechend der ersten Spiegelvorrichtung 26 ausgebildet sein und einen Mikrospiegelaktor, insbesondere mehrere ansteuerbare optische Elemente, aufweisen. Die optischen Elemente der zweiten Spiegelvorrichtung 70 sind abhängig von ihrem Schaltzustand aktiv oder passiv. Die aktiven optischen Elemente der zweiten Spiegelvorrichtung 70 lenken die auf sie gerichteten Fluoreszenzlichtstrahlen 44 über einen Spiegel 72 hin zu der ersten Detektorvorrichtung 52. Die räumliche Anordnung und Ausrichtung der zweiten Spiegelvorrichtung 70 ist präzise an die räumliche Anordnung und Ausrichtung der ersten Spiegelvorrichtung 26 angepasst. Da sich die beiden Spiegelvorrichtungen 26, 70 in zur Probe 40 konjugierten Ebenen befinden, ist es wichtig, dass der optische Weg von der ersten Spiegelvorrichtung 26 zur Probe dem optischen Weg von der Probe 40 zur zweiten Spiegelvorrichtung 70 entspricht. Daher ist bei diesem Ausführungsbeispiel das erste Linsensystem 32 zwischen dem zweiten Strahlteiler 34 und dem Objektiv 36 angeordnet, so dass sowohl das Beleuchtungslicht als auch das Detektionslicht das erste Linsenssystem 32 durchlaufen. Ferner sollte der Abstand von der Probe 40 zu der ersten Spiegelvorrichtung 26 genau so lang sein wie der Abstand von der Probe 40 zu der zweiten Spiegelvorrichtung 70.

Die zweite Spiegelvorrichtung 70 ist vorzugsweise mit der Steuereinheit gekoppelt, die die optischen Elemente der zweiten Spiegelvorrichtung 70 korrespondierend zu den optischen Elementen 60 der ersten Spiegelvorrichtung 26 steuert. Das bedeutet, dass ein durch die aktiven optischen Elemente auf der zweiten Spiegelvorrichtung 70 repräsentiertes Muster genau dem Muster entspricht, das die aktiven optischen Elemente 62 auf der ersten Spiegelvorrichtung 26 repräsentieren. Bei einem Umschalten der optischen Elemente 60 der ersten Spiegelvorrichtung 26 erfolgt dazu korrespondierend auch ein Umschalten der optischen Elemente der zweiten Spiegelvorrichtung 70.

Die Funktionsweise der zweiten Spiegelvorrichtung 70 entspricht der einer variablen Lochblende, wobei mit Hilfe der optischen Elemente der zweiten Spiegelvorrichtungen 70 sowohl die Position, als auch die Form, als auch die Anzahl der Lochblenden variiert werden kann. Vorzugsweise sind die optischen Elemente 60 der ersten Spiegelvorrichtung 26 parallel zu den optischen Elementen der zweiten Spiegelvorrichtung 70 geschaltet und so zeitlich mit diesen synchronisiert. Somit kann für jeden Teillichtstrahl 30 und jeden dazu korrespondierenden Fluoreszenzlichtstrahl 44 eine eigene Lochblende erzeugt werden, indem die entsprechenden optischen Elemente der zweiten Spiegelvorrichtung 70 aktiviert werden. Dadurch gelangt weniger Streulicht zu der ersten Detektorvorrichtung 52 als ohne die zweite Spiegelvorrichtung 70.

Vorzugsweise werden um die aktiven optischen Elemente der zweiten Spiegelvorrichtung 70 herum, die zu den aktiven optischen Elementen 26 der ersten Spiegelvorrichtung 26 korrespondieren, weitere optische Elemente der zweiten Spiegelvorrichtung 70 aktiviert, da bei fluoreszierenden Proben 40 die Emissionswellenlänge in der Regel länger ist als die Anregungswellenlänge, wodurch auch der auf die zweite Spiegelvorrichtung 70 projizierte Fokus des Fluoreszenzlichts 44 größer als der Beleuchtungsfokus 42 ist. Dies entspricht einer Vergrößerung der Lochblende und trägt dazu bei, dass möglichst wenig Fluoreszenzlicht 44 verloren geht. Will man eine geringe Konfokalität erzielen, können entsprechend mehr optische Elemente der zweiten Spiegelvorrichtung 70 aktiviert werden.

Bei FCS Messungen ist es auch von Vorteil unterschiedliche Detektionsvolumina einstellen zu können, um bessere Aussagen über die Diffusionsgeschwindigkeit zu erhalten, dies kann über die Größe der Lochblenden vor der Detektorvorrichtung 52 bestimmt werden.

Die Erfindung ist nicht auf die angegebenen Ausführungsbeispiele beschränkt. Beispielsweise können mehr oder weniger Detektorvorrichtungen 52, 58 angeordnet sein. Ferner können mehr oder weniger Linsensysteme 32, 46 angeordnet sein. Ferner kann die Lichtquelle 22 einen oder mehrere Laser umfassen, der bzw. die Beleuchtungslicht unterschiedlicher Wellenlänge erzeugen. Dies ermöglicht, unterschiedliche Farbstoffpartikel zum Fluoreszieren anzuregen, und so unterschiedliche Probenmoleküle gleichzeitig zu beobachten. Beim Ausleuchten der Beleuchtungsbereiche 43 können die Abstände der Beleuchtungsfoki zueinander variiert werden, indem innerhalb der Beleuchtungsbereiche 43 einzelne mögliche Beleuchtungsfoki 42 nicht erzeugt und somit ausgelassen werden. Der Beleuchtungslichtstrahl kann Licht unterschiedlicher Wellenlängen umfassen, so dass gleichzeitig Farbstoffpartikel unterschiedlicher Farbe zum Fluoreszieren angeregt werden können, wodurch gleichzeitig mehrere unterschiedliche Sorten von Probenmolekülen beobachtet werden können und deren Diffusionskoeffizienten gleichzeitig bestimmt werden können. Bei der zweiten Ausführungsform des Fluoreszenzmikroskops 20 kann auch die zweite Detektorvorrichtung 58 angeordnet sein. Ferner kann das Fluoreszenzmikroskop 20 weit mehr optische Komponenten, beispielsweise Linsen umfassen. Insbesondere können Linsen zwischen der Lichtquelle 22 und dem ersten Strahlteiler 28 und/oder zwischen der zweiten Spiegelvorrichtung 70 und der ersten Detektorvorrichtung 52 angeordnet sein. Alternativ zu der zweiten Spiegelvorrichtung 70 kann das Fluoreszenzlicht 44 auch über die erste Spiegelvorrichtung 26 zu der Detektorvorrichtung 52 geführt werden, wobei dann ein Variieren der Lochblendengröße nicht mehr möglich ist, da mit Hilfe der ersten Spiegelvorrichtung 26 die Teilstrahlen 30 erzeugt werden.

### Bezugszeichenliste:

- 20: Fluoreszenz-Mikroskop
- 22: Lichtquelle
- 24: Beleuchtungslichtstrahl
- 26: erste Spiegelvorrichtung
- 28: erster Strahlteiler
- 30: Teilstrahlen
- 32: erstes Linsensystem
- 34: zweiter Strahlteiler
- 36: Objektiv
- 38: Probenhalter
- 40: Probe
- 42: Beleuchtungsfokus
- 43: Beleuchtungsbereich
- 44: Fluoreszenzlicht
- 46: zweites Linsensystem
- 47: dritter Strahlteiler
- 48: erster Detektionsteilstrahl
- 50: erster Sperrfilter
- 52: erste Detektorvorrichtung
- 54: zweiter Detektionsteilstrahl
- 56: zweiter Sperrfilter
- 58: zweite Detektorvorrichtung
- 59: Anzeigeeinheit
- 60: optische Elemente
- 61: Bild
- 62: aktive optische Elemente
- 63: Teilbereiche
- 64: Detektorelemente
- 65: Probenstruktur
- 68: Detektionsbereich
- 70: zweite Spiegelvorrichtung
- 72: Spiegel
- S1-S13: Schritte eins bis dreizehn

## Patentansprüche

1. Verfahren zur Durchführung einer Fluoreszenz-Korrelations-Spektroskopie mit einem Fluoreszenz-Mikroskop (29),
bei dem ein Beleuchtungslichtstrahl (24) erzeugt wird,
mindestens ein Beleuchtungsbereich (43) einer Probe (40) ausgewählt wird,
der Beleuchtungslichtstrahl (24) in mindestens drei Teilstrahlen (30) so aufgespaltet wird, dass die Teilstrahlen (30) über eine Mikroskopoptik des Fluoreszenz-Mikroskops (29) auf den ausgewählten Beleuchtungsbereich (43) fokussiert werden, so dass fluoreszierende Farbstoffpartikel in dem Beleuchtungsbereich (43) der Probe (40) zum Fluoreszieren angeregt werden,
das von den Farbstoffpartikeln emittierte Fluoreszenzlicht (44) detektiert wird
und bei dem abhängig von dem detektierten Fluoreszenzlicht (44) mindestens ein Diffusionskoeffizient ermittelt wird, der repräsentativ für eine Diffusionsfähigkeit der fluoreszierenden Farbstoffpartikel ist.

2. Verfahren nach Anspruch 1,
bei dem ein Bild (61) der Probe (40) auf einer Anzeigeeinheit (59) angezeigt wird,
mindestens ein Teilbereich (63) des Bildes (61) der Probe (40) ausgewählt wird,
ermittelt wird, wie der Beleuchtungslichtstrahl (24) aufgespaltet werden muss, damit die Teilstrahlen (30) auf den Beleuchtungsbereich (43) der Probe (40) fokussiert werden, wobei der Beleuchtungsbereich (43) der Probe (30) abhängig von dem ausgewählten Teilbereich (63) des Bildes (61) der Probe (30) ausgewählt wird und zu diesem korrespondiert,
und bei dem der Beleuchtungslichtstrahl (24) so in die Teilstrahlen (30) aufgespaltet wird, dass fluoreszierende Farbstoffpartikel in dem Beleuchtungsbereich (43) der Probe (40) zum Fluoreszieren angeregt werden.

3. Verfahren nach einem der vorstehenden Ansprüche,
bei dem abhängig von dem oder den Diffusionskoeffizienten eine Interaktion zwischen Probenmolekülen erkannt wird, die mit den Farbstoffpartikeln gekoppelt sind, deren Diffusionskoeffizienten ermittelt wurden.

4. Verfahren nach einem der vorstehenden Ansprüche,
bei dem das Fluoreszenzlicht auf eine sensitive Fläche einer Detektorvorrichtung (52, 58), die mehrere Detektorelemente (64) umfasst, gelenkt wird und dort entsprechend zu den auf den Beleuchtungsbereich (43) der Probe (40) fokussierten Teilstrahlen (30) mindestens drei Detektionsfoki entstehen,
abhängig von dem Beleuchtungsbereich (43) der Probe (40) Positionen der Detektionsfoki auf der sensitiven Fläche der Detektorvorrichtung (52, 58) ermittelt werden
und bei dem selektiv nur die Detektorelemente (64) ausgelesen und/oder deren Signale ausgewertet werden, auf denen die Detektionsfoki positioniert sind.

5. Verfahren nach Anspruch 4,
bei dem eine Konfokalität des Fluoreszenz-Mikroskops (20) eingestellt wird, indem eine Anzahl der Detektorelemente (64), die je Detektionsfokus ausgelesen und/oder ausgewertet werden, eingestellt wird.

6. Verfahren nach einem der vorstehenden Ansprüche,
bei dem Farbstoffpartikel verwendet werden, die einen ersten Zustand haben, in dem die Farbstoffpartikel zum Fluoreszieren anregbar sind, und die einen zweiten Zustand haben, in dem die Farbstoffpartikel nicht zum Fluoreszieren anregbar sind und bei dem eine Untermenge der Farbstoffpartikel im ersten Zustand erzeugt und dann angeregt wird.

7. Verfahren nach einem der vorstehenden Ansprüche,
bei dem mindestens zwei Beleuchtungsbereiche (43) der Probe (40) aneinander gereiht ausgewählt werden,
eine Bewegung eines einzelnen Farbstoffpartikels über mehrere der Beleuchtungsbereiche (43) hinweg beobachtet wird und
bei dem der oder die Diffusionskoeffizienten des entsprechenden Farbstoffpartikels ermittelt werden.

8. Verfahren nach einem der vorstehenden Ansprüche,
bei dem der Beleuchtungslichtstrahl (24) gepulst erzeugt wird,
abhängig von den Pulsen des Beleuchtungslichtstrahls (24) die Detektorelemente (64) ausgelesen und/oder ausgewertet werden,
abhängig von dem detektierten Fluoreszenzlicht Leucht-Lebensdauern der Farbstoffpartikel ermittelt werden
und bei dem abhängig von den ermittelten Leucht-Lebensdauern Verbindungen und/oder Interaktionen der Probenmoleküle untersucht werden, die mit den entsprechenden Farbstoffpartikeln gekoppelt sind.

9. Vorrichtung zur Durchführung einer Fluoreszenz-Korrelations-Spektroskopie umfassend ein Fluoreszenz-Mikroskop (20),
mit einer Lichtquelle (22), die einen Beleuchtungslichtstrahl (24) erzeugt,
einer ersten Spiegelvorrichtung (26), auf die der Beleuchtungslichtstrahl (24) gerichtet ist und die eine Vielzahl von optischen Elementen (60) aufweist,
einer Steuereinheit, die mit der ersten Spiegelvorrichtung (26) gekoppelt ist und die die optischen Elemente (60) so ansteuert, dass die optischen Elemente (60) den Beleuchtungslichtstrahl (24) in mindestens drei Teilstrahlen (30) aufspalten,
einer Mikroskopoptik, die die Teilstrahlen (30) des Beleuchtungslichtstrahls (24) auf mindestens einen Beleuchtungsbereich (43) auf oder in einer Probe (40) fokussiert, wobei die Teilstrahlen (30) Farbstoffpartikel in der Probe (40) zum Fluoreszieren anregen,
und mit einer Detektorvorrichtung (52, 58), die von der Probe (40) emittierte Fluoreszenzlichtlichtstrahlen (44) detektiert und die mehrere Detektorelemente (60) umfasst, wobei die Steuereinheit steuert, welche Detektorelemente (60) ausgelesen und/oder ausgewertet werden.

10. Vorrichtung nach Anspruch 9,
mit einer Anzeigeeinheit (59), die ein Bild (61) der Probe (40) zeigt,
und mit einer Auswahlvorrichtung, die abhängig von einer Benutzereingabe mindestens einen Teilbereich (63) des Bildes (61) auswählt, wobei die Steuereinheit die optischen Elemente (60) so ansteuert, dass der Beleuchtungslichtstrahl (24) so aufgespaltet wird, dass die entstehenden Teilstrahlen (30) Beleuchtungsfoki (42) an entsprechenden Positionen auf oder in der Probe (40), die zu dem ausgewählten Teilbereich (63) korrespondieren, bewirken.

11. Vorrichtung nach einem der Ansprüche 8 oder 9,
bei der die Steuereinheit genau die Detektorelemente (64) ausließt und/oder auswertet, auf die die Fluoreszenzlichtstrahlen (44) fokussiert sind.

12. Vorrichtung nach einem der Ansprüche 9 bis 11,
bei der eine Konfokalität des Fluoreszenz-Mikroskops (20) über die Anzahl der je Detektionsfokus ausgelesenen und/oder ausgewerteten Detektorelemente (64) eingestellt ist.

13. Vorrichtung nach einem der Ansprüche 9 bis 12,
bei der die erste Spiegelvorrichtung (26) einen Mikrospiegelaktor umfasst und bei der die optischen Elemente (60) bewegliche Spiegel umfassen.

14. Vorrichtung nach einem der Ansprüche 9 bis 12,
bei der die erste Spiegelvorrichtung (26) einen LCOS-Aktor umfasst und bei der die optischen Elemente (60) je ein Polarisationselement und einen Mikrospiegel umfassen.

15. Vorrichtung nach einem der Ansprüche 9 bis 14,
bei der die Detektorelemente (64) der Detektorvorrichtung (52, 58) CMOS-Detektoren, APD-Detektoren, vollverarmte Silizium-Detektoren und/oder DEPFET-Detektoren umfassen.

16. Vorrichtung nach einem der Ansprüche 9 bis 15, mit einer zweiten Spiegelvorrichtung (70), auf die von der Probe (40) emittierte Fluoreszenzlichtlichtstrahlen (44) gerichtet sind, über die die Fluoreszenzlichtstrahlen (44) hin zu der ersten Detektorvorrichtung (52) und/oder zu der zweiten Detektorvorrichtung (58) verlaufen und die eine Vielzahl von optischen Elementen aufweist.

17. Vorrichtung nach Anspruch 16, bei der die zweite Spiegelvorrichtung (70) mit der Steuereinheit gekoppelt ist und bei der die Steuereinheit die optischen Elemente der zweiten Spiegelvorrichtung (70) korrespondierend zu den optischen Elementen (60) der ersten Spiegelvorrichtung (26) ansteuert.
